# EUROPEAN PATENT SPECIFICATION

(11) **EP 0 905 865 B1**
(45) Date of publication and mention of the grant of the patent: **20.12.2006**
(21) Application number: 98307833.8
(22) Date of filing: 25.09.1998
(51) Int. Cl.: H02K 15/14, H02K 5/173

(54) **Method of assembling magnetic disk driving motor**
Methode zur Montage des Antriebsmotors einer Magnetplatteneinheit
Méthode d'assemblage du moteur d'entraînement pour une unité de disque magnétique

(30) Priority: 26.09.1997 JP 26208097
(43) Date of publication of application: 31.03.1999
(73) Proprietor: MINEBEA Co., Ltd., Kitasaku-gun, Nagano-ken (JP)
(72) Inventor: Kurasawa, Toshio, c/o Minebea Co., Ltd., Miyota-machi, Kitasaku-gun, Nagano-ken (JP)
(74) Representative: Jackson, Peter Arthur

(56) References cited:
- US-A- 4 552 417
- US-A- 4 760 298
- US-A- 4 814 652
- US-A- 5 097 164

## Description

The present invention relates to a method of assembling a magnetic disk driving motor.

The progress in technologies in recent years to provide high performance computers, personal computers in particular, is remarkable. Also remarkable is achievement of extremely high speed operation of the computer. Keeping pace with it, realization of ever higher performance of spindle motors for driving magnetic disk is strongly demanded. While achievement of high performance is demanded, it is also demanded to provide magnetic disk driving motors being simple in structure and manufactured at low cost.

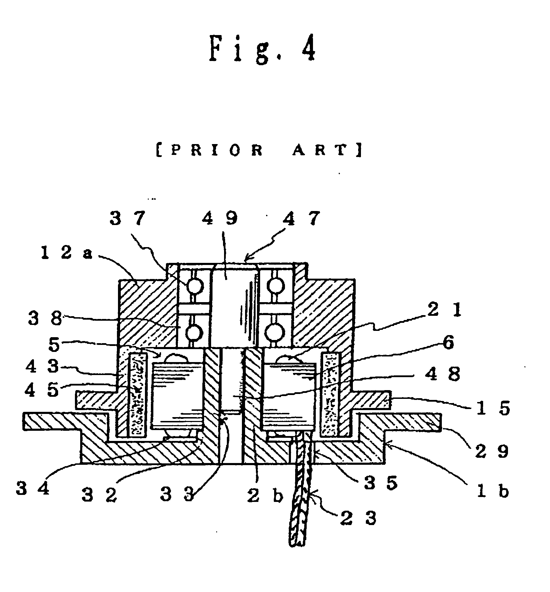

There has been made a proposal to meet such demands and a magnetic disk driving motor realizing it is disclosed in the gazette of Patent No. 2590334. This magnetic disk driving motor is, in a motor for driving magnetic disk including, as shown in FIG. 4, a fixing frame 1b, a center shaft 47 set up on the fixing frame 1b, a pair of bearings 37 and 38 fitted over the large-diametrical portion 49 of the center shaft 47 with a predetermined distance apart from each other, a rotor frame 12a in a cup form fitted over the pair of bearings 37 and 38, a permanent magnet 45 mounted on the rotor frame 12a, laminated cores 6 constituting armatures 5, and armature coils 21 wound around the laminated cores 6, characterized by that the fixing frame 1b is provided with a center axial pipe 2b, the small-diametrical portion 48 of the center shaft 47 is put inside the free end portion of the center axial pipe 2b, the laminated core 6 is fitted over the outer peripheral face of the center axial pipe 2b, a hole 35 is made in the fixing frame 1b, and a lead wire 23 from the armature coil 21 is led out through the hole 35, whereas the rotor frame 12a has a cylindrical wall 43, which is provided with a disk supporting table 15 for mounting a magnetic disk such that the magnetic disk is mounted around the cylindrical wall 43.

Further, referring to FIG. 4, reference numeral 29 denotes a flange, 32 denotes a large-diametrical portion formed at the base portion of the center axial pipe 2b, 33 denotes a medium-diametrical portion contiguous to the large-diametrical portion 32, and 34 denotes a printed board.

In the above described prior art example, the rotor frame 12a borne by the pair of bearings 37 and 38 for rotation is held in a cantilevered manner on the center shaft 47 mounted on the center axial pipe 2b having the armatures 5 fixed thereon. Therefore, though the side wall 43 of the rotor frame 12a is extended so as to cover the outer periphery of the armature 5, it is enabled to make accurate concentric rotation not swaying with respect to the armature 5. Accordingly, the magnetic disk set on the rotor frame 12a can make accurate rotation free from irregularities such as swaying. Further, since the motor is not provided with end plates surrounding the armature 5 on the side of the fixing frame 1b, the number of the components can be decreased and it is made possible to lead out the coil lead wire 23 through the hole 35 made in the fixing frame 1b and, hence, the structure of the whole of the motor can be greatly simplified. Further, since the armature 5 is fixed on the outer peripheral face of the center axial pipe 2b on which the center shaft 47 is mounted, such an effect is stated to be obtained that stress is applied radially and inwardly toward the center axial pipe 2b by the installation of the armature 5 so that the small-diametrical portion 48 of the center shaft 47 is compressed and, thereby, the center shaft 47 is fixed more securely to the center axial pipe 2b.

In the above described prior art example, however, since the laminated core 6 is press-fitted over the periphery of the medium-diametrical portion 33 of the cylindrical center axial pipe 2b rising from the fixing frame 1b, there is such a defect that vibration or noise generated from the armature coil 21 wound around the laminated core 6 is transmitted from the interior of the laminated core 6 to the magnetic disk through the center shaft 47 and the rotor frame 12a. Further, when laminated core 6 is press-fitted over the center axial pipe 2b, it sometimes occurs that a large stress is applied to the medium-diametrical portion of the center shaft 47 and the same is deformed and, it is found that such a difficulty arises, depending on the manner of application of the stress, that a strain is produced in the center shaft 47 to deviate the axial line from its right position and shift the rotating axis of the rotor.

The present invention was made to overcome the above mentioned difficulties included in the prior art. It is an object of the invention to provide such a method of assembling a magnetic disk driving motor, which is a magnetic disk driving motor adapted to prevent vibration noise of the driving motor from being transmitted to the magnetic disk device, that keeps the rotating centre shaft of the rotor from deviating from its right position during the assembling work.

US-A-4760298 describes a motor for rotating a disk comprising an armature concentrically secured to a shaft which is fixed on a mounting frame.

US-A-5097164 describes a hermetically sealed type dynamic fluid bearing motor.

US-A-4552417 describes an electric motor unit for rotating a polygonal mirror.

US-A-4814652 describes a disk drive motor having a two piece aluminium spindle.

According to the present invention a method of fabricating a magnetic disk driving motor having a stator for generating a revolving magnetic field, exciting magnetic poles formed of a permanent magnet disposed around the stator in confronting relationship therewith, and a rotor frame in a cup form provided with the exciting magnetic poles on the inside of its lower end, the rotor frame being held on the center shaft in a cantilevered manner to support a magnetic disk; the method being characterised by the steps of:
holding the temperature of a flange at higher temperature than the temperature of a support shaft prior to fixing a laminated core on the flange;
inserting, while the condition in the above described step is existing, a portion of the support shaft that has a smaller diameter than the support shaft into a through hole made in a support pillar which projects from the flange and is integral therewith, thereby fixing the support shaft in the through hole in the support pillar; and then
fixing, the laminated core on the flange spaced a distance apart from the support pillar, such that a noise cutoff layer is interposed between the laminated core and the support pillar.

During inserting the portion of the support shaft that has a smaller diameter than the support shaft into the through hole made in the support pillar, the flange may be held at higher temperature than the support shaft by keeping the support shaft at the ambient temperature and heating the flange, or the flange may be held at higher temperature than the support shaft by cooling the support shaft and heating the flange, or the flange may be held at higher temperature than the support shaft by cooling the support shaft and keeping the flange at the ambient temperature.

In the accompanying drawings:
FIG. 1 is a sectional view of an embodiment of the invention.
FIG. 2 is a drawing explanatory of shrink fitting operation. of a support shaft.
FIG. 3 is a drawing explanatory of shrink fitting operation of a support shaft.
FIG. 4 is a sectional view of a prior art example.

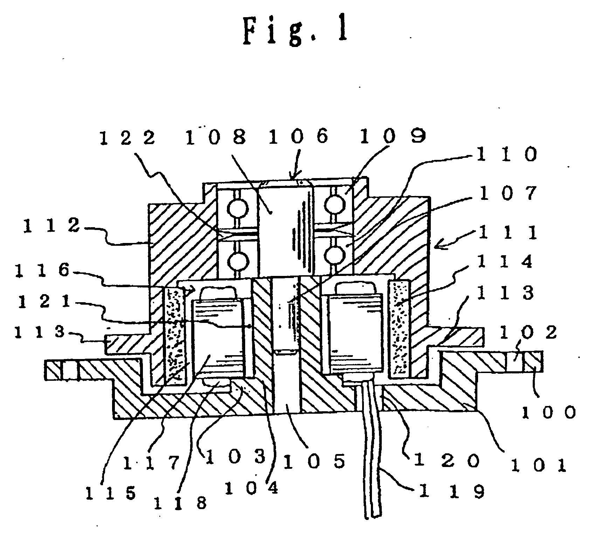

An embodiment of the invention will be described in detail with reference to the accompanying drawings. FIG. 1 is a sectional view of the same. Referring to FIG. 1, the magnetic disk driving motor according to the invention has a flange 100 made of a metal such as aluminum, and in the center of the flange 100, there is provided a dish-formed recess 101. Reference numeral 102 denotes a fixing hole for fixing the flange in place. In the center of the recess 101, there is set up a pillar 104 having a step portion 103 and serving as a center shaft. In the upper end portion of a center through hole 105 made in the pillar 104, a small-diametrical portion 107 of a support shaft 106 is securely fixed by shrink fitting.

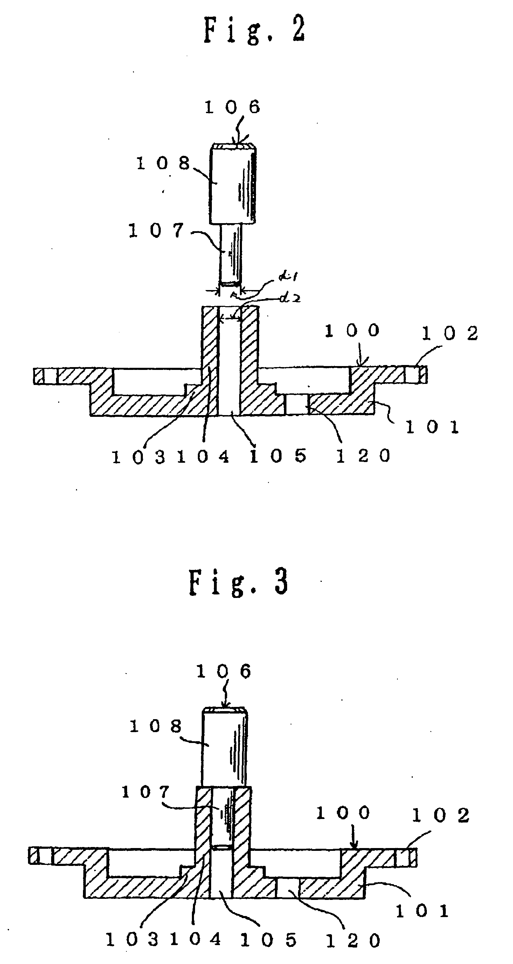

Referring to FIG. 2, the diameter d1 of the small-diametrical portion 107 of the support shaft 106 is made slightly larger than the inner diameter d2 of the through hole 105 made in the support pillar 104. In carrying out the shrink fitting, the whole of the flange 100 made of aluminum is heated up to around 200 degrees C. By this heating up, the flange as a whole expands so that the inner diameter d2 of the through hole 105 is expanded a little and becomes greater than the diameter d1 of the small-diametrical portion 107. The support shaft 106 made of steel is cooled down to around - 10 degrees C. by a cooling device. By this cooling down, the diameter d1 of the small-diametrical portion 107 becomes smaller than the inner diameter d2 of the through hole 105. The small-diametrical portion 107 is quickly inserted into the through hole 105 as shown in FIG. 3 while they are held in the condition d2 > d1.

After inserting the small-diametrical portion 107 into the through hole, when the flange 100 and the support shaft 106 are returned to the normal temperature, the diameter of the small-diametrical portion of the support shaft 106 becomes larger to restore its original dimension and the inner diameter of the through hole 105 shrinks so that the support shaft 106 is securely fixed in the support pillar 104. As apparent from the above description, in fixing the support shaft 106 into the support pillar 104, an impulse by drive fitting or a large stress by press fitting as with the prior art is not given to the support pillar 104. Therefore, even if the support pillar is made of such a soft metal as aluminum, it is prevented from deforming and the support shaft 106 after being fitted maintains its positional accuracy. Of course, holding the flange at around 200 degrees C. and the support shaft at around - 10 degrees C, is an example and it is well if a temperature difference is produced between both the members such that the condition d2 > d1 exists.

Referring back to FIG. 1, over the large-diametrical portion 108 of the support shaft 106, there are fitted two ball bearings 109 and 110 spaced apart a little from each other. Further, over the outer rings of the ball bearings 109 and 110, there is rotatably fitted a rotor cup 111. The lower end of the rotor cup 111 is extended downward to reach the bottom of the recess 101. On the peripheral wall 112 of the rotor cup 111 close to its lower end, there is provided a disk supporting table 113.

Here, it is adapted such that a plurality of magnetic disc media are arranged with a distance apart from each other above the disk supporting table 113 and along the peripheral wall 112 inserted therein but the state of the arrangement is not shown in FIG. 1. On the inner side of the peripheral wall 112, there is fixed a cylindrical permanent magnet 114 forming the exciting magnetic poles. On the inner side of the permanent magnet 114, there are provided stators 116 with a small gap 115 apart from the permanent magnet. The stator 116 has a laminated core 117 provided with a magnetic pole at its front end and an armature coil 118 wound around the same. The lead wire 119 of the armature coil 118 is led out through a hole 120 made in the recess 101.

As apparent from FIG. 1, the lower end face of the laminated core 117 is accurately positioned on the step portion 103 provided in the center of the recess 101 and securely fixed thereto with an adhesive agent or the like. Further, between the inner side of the laminated core 117 and the pillar 104, there is interposed a noise cutoff layer 121. In the present embodiment, the noise cutoff layer 121 is provided by an air gap. When seen from the side of the laminated core 117 made of a metal, the noise cutoff layer 121 provided by air gap has an extremely high acoustic impedance. It also has an extremely high acoustic impedance when seen from the side of the pillar 104 made of a metal. Accordingly, there is formed a mismatch layer of acoustic impedance on the contact face between the noise cutoff layer 121 and the surface of the laminated corre 117 or the pillar 104. Therefore, spike or vibration noise produced in the armature 116 is unable to pass through the noise cutoff layer 121 and, hence, it is hardly transmitted to the pillar 104. Reference numeral 122 denotes a belleville spring interposed between the ball bearings 109 and 100.

The above noise cutoff layer 121 need not necessarily be an air gap but may be such a substance as porous ceramic or porous synthetic resin filled therein, which has a high acoustic impedance when seen from the side of the laminated core 117 or the pillar 104.

Having described the invention as related to the above embodiment, it is apparent that various variations or applications are possible within the scope of the present claims.

As described above in detail, the present invention, in a method of fabricating a magnetic disk driving motor having a stator for generating a revolving magnetic field, exciting magnetic poles formed of a permanent magnet disposed around the stator in confronting relationship therewith, and a rotor frame having the exciting magnetic poles on the inner side of its lower end, rotatably held on a center shaft in a cantilevered manner, and supporting a magnetic disk, comprises the steps of holding, prior to fixing a laminated core in a flange, the flange at higher temperature than a support shaft, inserting, while the condition in the above described step is existing, the small-diametrical portion of the support shaft into a through hole made in a support pillar projected from the flange integrally therewith thereby fixing the support shaft in the through hole made in the support pillar projected from the flange, and fixing, after fixing the support shaft in the support pillar on the flange, the laminated core in the flange with a distance apart from the support pillar. Therefore, in fixing the support shaft into the support pillar, an impulse by drive fitting or a large stress by press fitting as with the prior art is not given to the support pillar. Therefore, even if the support pillar is made of such a soft metal as aluminum, it is prevented from deforming and the support shaft after being fitted maintains its positional accuracy.

## Claims

1. A method of fabricating a magnetic disk driving motor having a stator (116) for generating a revolving magnetic field, exciting magnetic poles (114) formed of a permanent magnet disposed around the stator in confronting relationship therewith, and a rotor frame (111) in a cup form provided with the exciting magnetic poles (114) on the inside of its lower end, the rotor frame (11) being held on the center shaft in a cantilevered manner to support a magnetic disk; the method being **characterised by** the steps of:
holding the temperature of a flange (100) at higher temperature than the temperature of a support shaft (106) prior to fixing a laminated core (117) on the flange;
inserting, while the condition in the above described step is existing, a portion of the support shaft (107) that has a smaller diameter than the support shaft into a through hole (105) made in a support pillar (104) which projects from the flange (100) and is integral therewith, thereby fixing the support shaft in the through hole in the support pillar; and then
fixing, the laminated core (117) on the flange spaced a distance apart from the support pillar, such that a noise cutoff layer (121) is interposed between the laminated core and the support pillar.

2. A method according to claim 1, wherein during the step of inserting the portion of the support shaft (107) that has a smaller diameter than the support shaft into the through hole (105) made in the support pillar (104), the flange (100) is held at higher temperature than the temperature of the support shaft (106) by keeping the support shaft at the ambient temperature and heating the flange.

3. A method according to claim 1, wherein during the step of inserting the portion of the support shaft (107) that has a smaller diameter than the support shaft into the through hole (105) made in the support pillar (104), the flange (100) is held at higher temperature than the temperature of the support shaft by cooling the support shaft and heating the flange.

4. A method according to claim 1, wherein during the step of inserting the portion of the support shaft (107) that has a smaller diameter than the support shaft into the through hole (105) made in the support pillar (104), the flange (100) is held at higher temperature than the temperature of the support shaft by cooling the support shaft and keeping the flange at the ambient temperature.

5. A method according to claim 1, wherein the noise cutoff layer (121) is filled with a substance that has a higher acoustic impedance than the laminated core (17) or the support pillar (104).

6. A method according to claim 1, wherein the noise cutoff layer (121) is filled with a ceramic or porous synthetic resin.

## Patentansprüche

1. Verfahren zur Herstellung eines Antriebsmotors einer Magnetplatteneinheit mit einem Stator (116) zum Erzeugen eines umlaufenden magnetischen Feldes, magnetischen Erregerpolen (114), die durch einen Permanentmagneten gebildet sind, der um den Stator herum mit diesem in gegenüberliegender Beziehung angeordnet ist, und einem Rotorrahmen (111) mit einer Becherform, der auf der Innenseite seines unteren Endes mit den magnetischen Erregerpolen (114) versehen ist, wobei der Rotorrahmen (111) auf der Mittelachse in einer freitragenden Art und Weise gehalten wird, um eine Magnetplatteneinheit zu tragen; wobei das Verfahren **gekennzeichnet ist durch** die Schritte:
Halten der Temperatur eines Flansches (100) bei höherer Temperatur als die Temperatur einer Stützachse (106) vor Befestigen eines Blechkerns (117) auf dem Flansch;
Einbringen eines Teils (107) der Stützachse, der einen geringen Durchmesser aufweist als die Stützachse, in ein Durchgangsloch (105), das in einer Stützsäule (104) gemacht ist, die von dem Flansch (100) ausgeht und mit diesem einstückig ist, während die im oben genannten Schritt beschriebene Bedingung vorhanden ist, wobei **dadurch** die Stützachse im Durchgangsloch in der Abstandssäule fixiert wird; und dann
Befestigen des Blechkerns (117) auf dem Flansch mit einem Abstand getrennt von der Stützsäule (104) derart, daß eine Geräuschsperrschicht (121) zwischen dem Blechkern und der Stützsäule eingebracht ist.

2. Verfahren nach Anspruch 1, bei dem während des Schrittes des Einsetzens des Teils (107) der Stützachse, der einen geringeren Durchmesser aufweist als die Stützachse, in das Durchgangsloch (105), das in der Stützsäule (104) gemacht ist, der Flansch (100) bei höherer Temperatur gehalten wird als die Temperatur der Stützachse (106) durch Halten der Stützachse bei Umgebungstemperatur und Erwärmen des Flansches.

3. Verfahren nach Anspruch 1, bei dem während des Schrittes des Einsetzens des Teils (107) der Stützachse, der einen geringeren Durchmesser aufweist als die Stützachse, in das Durchgangsloch (105), das in der Stützsäule (104) gemacht ist, der Flansch (100) bei höherer Temperatur gehalten wird als die Temperatur der Stützachse durch Kühlen der Stützachse und Erwärmen des Flansches.

4. Verfahren nach Anspruch 1, bei dem während des Schrittes des Einsetzens des Teils (107) der Stützachse, der einen geringeren Durchmesser aufweist als die Stützachse, in das Durchgangsloch (105), das in der Stützsäule (104) gemacht ist, der Flansch (100) bei höherer Temperatur gehalten wird als die Temperatur der Stützachse durch Kühlen der Stützachse und Halten des Flansches bei Umgebungstemperatur.

5. Verfahren nach Anspruch 1, bei dem die Geräuschsperrschicht (121) mit einer Substanz ausgefüllt ist, die einen höheren akustischen Scheinwiderstand aufweist als der Blechkern (117) oder die Stützsäule (104).

6. Verfahren nach Anspruch 1, bei dem die Geräuschsperrschicht (121) mit einem keramischen oder porösen Synthetikharz ausgefüllt ist.

## Revendications

1. Procédé de fabrication d'un moteur d'entraînement pour disque magnétique comportant un stator (116) destiné à générer un champ magnétique rotatif, des pôles magnétiques excitants (114) formés d'un aimant permanent disposé autour du stator dans une relation de confrontation avec celui-ci, et un cadre de rotor (111) en forme de coupelle muni des pôles magnétiques excitants (114) sur l'intérieur de son extrémité inférieure, le cadre de rotor (111) étant maintenu en porte-à-faux sur l'arbre central pour supporter un disque magnétique ; le procédé étant **caractérisé par** les étapes consistant à :
maintenir la température d'une bride (100) à une température supérieure à la température d'un arbre de support (106) avant de fixer une âme laminée (117) sur la bride ;
insérer, alors que la condition de l'étape décrite ci-dessus existe, une partie de l'arbre de support (107) qui a un diamètre plus petit que l'arbre de support, dans un trou traversant (105) créé dans une colonne de support (104) qui dépasse de la bride (100) et fait partie intégrante à celle-ci, fixant de ce fait l'arbre de support dans le trou traversant de la colonne de support ; puis
fixer l'âme laminée (117) sur la bride à une certaine distance de la colonne de support (104), de sorte qu'une couche coupe-bruit (121) soit interposée entre l'âme laminée et la colonne de support.

2. Procédé selon la revendication 1, dans lequel, pendant l'étape consistant à insérer la partie de l'arbre de support (107) qui a un diamètre plus petit que l'arbre de support, dans le trou traversant (105) créé dans la colonne de support (104), la bride (100) est maintenue à une température plus élevée que la température de l'arbre de support (106) en conservant l'arbre de support à la température ambiante et en chauffant la bride.

3. Procédé selon la revendication 1, dans lequel, pendant l'étape consistant à insérer la partie de l'arbre de support (107) qui a un diamètre plus petit que l'arbre de support, dans le trou traversant (105) créé dans la colonne de support (104), la bride (100) est maintenue à une température plus élevée que la température de l'arbre de support en refroidissant l'arbre de support et en chauffant la bride.

4. Procédé selon la revendication 1, dans lequel, pendant l'étape consistant à insérer la partie de l'arbre de support (107) qui a un diamètre plus petit que l'arbre de support, dans le trou traversant (105) créé dans la colonne de support (104), la bride (100) est maintenue à une température plus élevée que la température de l'arbre de support en refroidissant l'arbre de support et en maintenant la bride à la température ambiante.

5. Procédé selon la revendication 1, dans lequel la couche coupe-bruit (121) est remplie d'une substance qui a une impédance acoustique plus élevée que l'âme laminée (117) ou la colonne de support (104).

6. Procédé selon la revendication 1, dans lequel la couche coupe-bruit (121) est remplie d'une résine synthétique poreuse ou de céramique.
